# EUROPÄISCHE PATENTSCHRIFT

(11) **EP 1 105 242 B1**
(45) Veröffentlichungstag und Bekanntmachung des Hinweises auf die Patenterteilung: **23.01.2002**
(21) Anmeldenummer: 99940162.3
(22) Anmeldetag: 06.08.1999
(51) Int. Cl.: B23D 57/00, B28D 1/08

(54) **SÄGESEILFÜHRUNG MIT ZWEI SCHWENKBAR GELAGERTEN SEILFÜHRUNGSROLLEN**
SAW-CABLE GUIDE WITH TWO SWIVELLING CABLE GUIDE ROLLS
GUIDE-CABLE DE SCIE COMPORTANT DEUX ROULEAUX GUIDE-CABLE OSCILLANTS

(30) Priorität: 12.08.1998 DE 29814495 U
(43) Veröffentlichungstag der Anmeldung: 13.06.2001
(73) Patentinhaber: Steiner, Andreas, 5310 Tiefengraben (AT)
(72) Erfinder: Steiner, Andreas, 5310 Tiefengraben (AT)
(74) Vertreter: Ernicke, Hans-Dieter, Dipl.-Ing.
(86) Internationale Anmeldenummer: EP9905695
(87) Internationale Veröffentlichungsnummer: WO0009287

(56) Entgegenhaltungen:
- WO-A-96/33058
- US-A- 5 060 628
- PATENT ABSTRACTS OF JAPAN vol. 018, no. 143 (M-1574), 9. März 1994 (1994-03-09) -& JP 05 321488 A (DAIMOSHIYA:KK), 7. Dezember 1993 (1993-12-07)

## Beschreibung

Die Erfindung betrifft eine Sägeseilführung mit den Merkmalen im Oberbegriff des Hauptanspruchs.

Eine solche Sägeseilführung ist aus der WO96/33058 bekannt. Sie besteht aus einem Ständer mit einem daran höhenverstellbar und drehbar gelagerten Querträger, an dessen ein oder beiden Enden eine h-förmig querverlaufende Hohlachse angeordnet ist. An den Enden der Hohlachse sind zwei frei drehbare Seilführungsrollen schwenkbar gelagert. Die Seilführungsrollen fluchten mit ihren Schwenkachsen. Das Sägeseil wird zwischen den zwei Seilführungsrollen direkt geführt und durch die Hohlachse geleitet. Bei dieser Anordnung ist nicht immer eine sichere Führung des Sägeseils zwischen den zwei Seilführungsrollen gewährleistet. Außerdem greifen die Seilkräfte kinematisch ungünstig mit einem Abstand und Hebelarm am Ständer an. Zudem ist die Kinematik der Sägeseilführung nicht optimal.

Es ist Aufgabe der vorliegenden Erfindung, eine bessere Sägeseilführung aufzuzeigen.

Die Erfindung löst diese Aufgabe mit den Merkmalen im Hauptanspruch.
Bei der erfindungsgemäßen Sägeseilführung ist die Kinematik und die Abstützung der Sägeseilkräfte gegenüber dem Stand der Technik verbessert. Außerdem ist eine bessere Führung und Winkel-Umlenkung des Sägeseils zwischen den schwenkbaren Seilführungsrollen gewährleistet.

Von besonderem Vorteil ist es dabei, wenn das Sägeseil zusätzlich über eine drehbare Umlenkrolle am Ständer geführt ist. Dies verkürzt die freien Seillängen und vermindert eine unerwünschte Schwingungsneigung des Sägelseils. Zudem kann die Führungsfläche dieser Umlenkrolle dem Sägeseil einen Drall verleihen, wodurch ein gleichmäßigerer umfangseitiger Verschleiß des Sägeseils erzielt wird. Zudem wird durch den Drall auch ein ruhigerer Seillauf erzielt.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Sägeseilführung in Seitenansicht und
- Figur 2:: eine Draufsicht der Anordnung von Figur 1 gemäß Pfeil II.

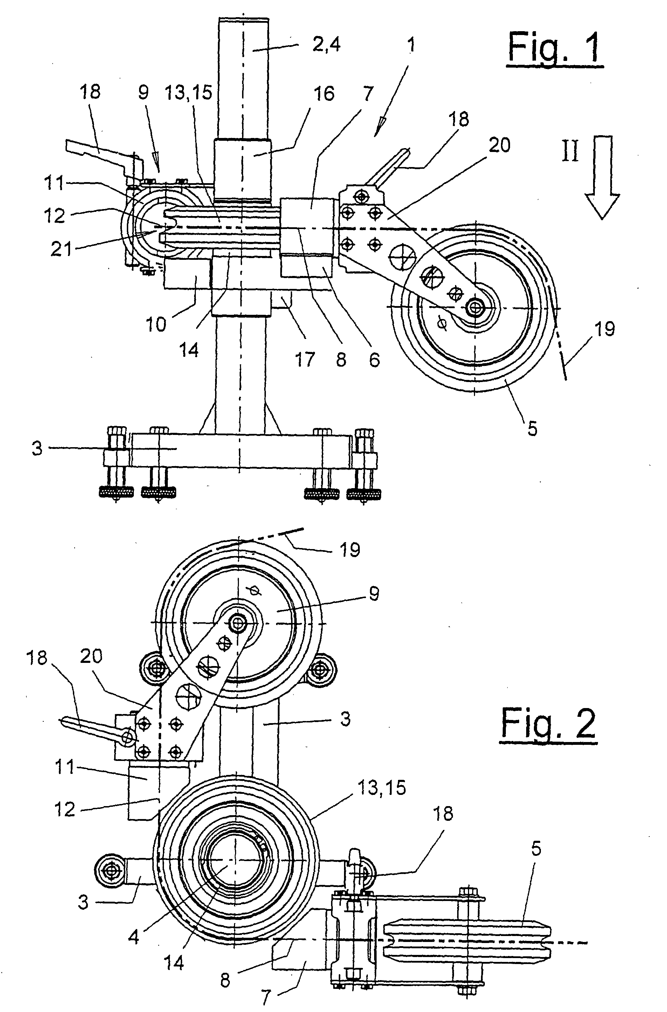

Die in Figur 1 und 2 gezeigte Sägeseilführung (1) wird in Verbindung mit einer Seilsäge (nicht dargestellt) eingesetzt, die zum Schneiden von Werkstücken, z.B. blockförmigen Körpern aus Beton, Mauerwerk oder sonstigen Werkstoffen, dient. Eine solche Seilsäge ist z.B. aus der WO95/18692 bekannt.

Die gezeigte Sägeseilführung (1) dient zur Umlenkung und Führung des Sägeseiles (19) am Werkstück (nicht dargestellt). Sie ist dazu in der Regel zweifach vorhanden und kann am oder in der Nähe des Werkstückes in geeigneter Weise angeordnet und befestigt werden.

Die Sägeseilführung (1) besitzt einen Ständer (2), der in beliebig geeigneter Weise ausgebildet ist. In der gezeigten Ausführungsform hat er eine Fußplatte (3) und eine hiervon senkrecht abstehende Säule (4). An der Fußplatte (3) können mehrere Nivellierstifte vorhanden sein, mit denen sich der Ständer (2) in der gewünschten Weise gegenüber dem Werkstück und/oder dem Untergrund ausrichten läßt. Die Fixierung erfolgt durch eine Dübelschraube oder in sonstiger beliebig geeigneter Weise.

Die Sägeseilführung (1) besitzt ferner zwei Seilführungsrollen (5,9), die jeweils über einen schrägen Ausleger (20) an einem Schwenkgehäuse (7,11) gelagert sind. Die Seilführungsrollen (5,9) sind mit ihren Achsen frei drehbar an ihren Auslegern (20) gelagert, wobei die Ausleger (20) ihrerseits frei um 360° drehbar an den Schwenkgehäusen (7,11) gelagert sind. Die Schwenkgehäuse (7,11) sind über geeignete abgewinkelte Tragarme (6) an einer gemeinsamen Hülse (16) lösbar oder starr befestigt, die auf der Säule (4) gleitend höhenverstellbar und arretierbar geführt ist. Alternativ können die Schwenkgehäuse (7,11) auch einzeln und unabhängig voneinander an eigenen Hülsen oder dgl. höhenverstellbar geführt sein. Über eine Arretierung (17) kann die Hülse (16) mit den Seilführungsrollen (5,9) in der gewünschten Höhe fixiert werden.

Die Schwenkgehäuse (7,11) erlauben eine Drehung der Seilführungsrollen (5,9) um jeweils eine Schwenkachse (8,12). Diese Schwenkachsen (8,12) sind vorzugsweise in einer gemeinsamen Ebene und vorzugsweise parallel zur Fußplatte (3) angeordnet. Sie sind ferner in einem 90°-Winkel zueinander angeordnet. Wie Figur 2 verdeutlicht, wird dabei das Sägeseil (19) um die Säule (4) des Ständers (2) herumgeführt.

Im gezeigten Ausführungsbeispiel sind die Tragarme (6) an der Hülse (16) starr befestigt. Dadurch haben die Schwenkachsen (8,12) einen festen und vorzugsweise 90° großen Winkel zueinander. Alternativ können die Tragarme (6) auch verstellbar an der Hülse (16) mit einer geeigneten Arretierung gelagert sein, so daß sich die Schwenkachsen (8,12) auch in einem anderen Winkel zueinander einstellen und fixieren lassen.

In der bevorzugten Ausführungsform ist auf dem Ständer (2) und insbesondere auf der Säule (4) eine Umlenkrolle (13) frei drehbar um die Säulenachse gelagert. Die Umlenkrolle (13) kann mit ihrem Lager (14) ebenfalls an der Hülse (16) angeordnet sein. Alternativ kann die Umlenkrolle (13) eigenständig in der Höhe verstellbar und arretierbar sein.

Sie befindet sich mit ihrer Seilführungsfläche (15) vorzugsweise in der gleichen Ebene wie die Schwenkachsen (8,12), so daß das Sägeseil (19) zwischen den Seilführungsrollen (5,9) über die Umlenkrolle (13) in der gleichen Ebene umläuft und um den Ständer (2) im gewünschten Winkel herumgelenkt wird.

Die Seilführungsfläche (15) besteht aus einem elastischen Material, vorzugsweise Gummi und erteilt dem Sägeseil (19) durch seitlichen Kontakt einen Zwangsdrall. Wie Figur 1 verdeutlicht, ist dazu die Seilführungsfläche (15) mit einer Schrägprofilierung (21) versehen, die z.B. am unteren Führungsflächenrand angeordnet ist. Der Zwangsdrall vermindert und vergleichmäßigt den umfangseitigen Verschleiß des Sägeseils (19). Außerdem wird das Seillaufgeräusch verringert. Die Seilführungsfläche (15) kann glatt oder mit quer oder schräg laufenden Rillen (nicht dargestellt) ausgebildet sein. Durch die Umlenkrolle (13) wird das Sägeseil (19) im Einsatz zusätzlich zwischen den Seilführungsrollen (5,9) geführt, wodurch Schwingungen zwischen dem Werkstück und der Sägeseilführung (1) bzw. der Seilsäge (nicht dargestellt) reduziert werden.

Im weiteren können die Schwenkgehäuse (7,11) hohl ausgebildet sein, wobei das Sägeseil (19) durch die Schwenkgehäuse (7,11) hindurchgeführt wird und dabei mit den Schwenkachsen (8,12) fluchtet. Die Führung durch die hohlen Schwenkgehäuse (7,11) dient der Sicherheit bei eventuellen Seilrissen als Seilfang und verhindert zusätzlich ein Seilpeitschen nach hinten. Die schrägen Ausleger (20) und der Rollenabstand von den Schwenkgehäusen (7,11) sind so bemessen, daß das entlang der Schwenkachsen (8,12) geführte Sägeseil (19) tangential auf die Seilführungsrollen ((5,9) aufläuft.

Abwandlungen der gezeigten Ausführungsform sind in verschiedener Weise möglich. Zum einen kann statt der Umlenkrolle (13) eine andere Art der Umlenkung zwischen den im Winkel zueinander angeordneten Seilführungsrollen (5,9) vorhanden sein. Desgleichen läßt sich auch die Lagerung der Seilführungsrollen (5,9) variieren. Die Umlenkrolle (13) kann eine zusätzliche Höhenverstellung gegenüber der Hülse (16) und den Seilführungsrollen (5,9) haben. Gegebenenfalls ist auch eine Schrägstellung der Umlenkrolle (13) möglich.

### BEZUGSZEICHENLISTE

- 1: Sägeseilführung
- 2: Ständer
- 3: Fußplatte
- 4: Säule
- 5: Seilführungsrolle
- 6: Tragarm
- 7: Schwenkgehäuse
- 8: Schwenkachse
- 9: Seilführungsrolle
- 10: Tragarm
- 11: Schwenkgehäuse
- 12: Schwenkachse
- 13: Umlenkrolle, Seildrall-Führungsrolle
- 14: Lager
- 15: Führungsfläche
- 16: Hülse
- 17: Arretierung, Hülse
- 18: Arretierung, Seilführungsrollen
- 19: Sägeseil
- 20: Ausleger
- 21: Schrägprofilierung

## Patentansprüche

1. Sägeseilführung mit einem Ständer (2) und mindestens zwei schwenkbar daran gelagerten drehbaren Seilführungsrollen (5,9), **dadurch gekennzeichnet, dass** die Schwenkachsen (8,12) der Seilführungsrollen (5,9) im Winkel zueinander angeordnet sind, und dass am Ständer (2) eine Umlenkung für das Sägeseil (19) angeordnet ist, wobei das Sägeseil (19) um den Ständer (2) herumführbar ist.

2. Sägeseilführung nach Anspruch 1, **dadurch gekennzeichnet, dass** die Schwenkachsen (8,12) in der gleichen Ebene und in einem einstellbaren Winkel von vorzugsweise 90° zueinander angeordnet sind.

3. Sägeseilführung nach Anspruch 1 oder 2, **dadurch gekennzeichnet, dass** die Umlenkung als drehbare Umlenkrolle (13) ausgebildet ist.

4. Sägeseilführung nach Anspruch 1, 2 oder 3, **dadurch gekennzeichnet, dass** die Umlenkrolle (13) eine elastische Seilführungsfläche (15), vorzugsweise aus Gummi, aufweist

5. Sägeseilführung nach einem der Ansprüche 1 bis 4, **dadurch gekennzeichnet, dass** die Seilführungsfläche (15) eine Schrägprofilierung (21) aufweist.

6. Sägeseilführung nach einem der Ansprüche 1 bis 5, **dadurch gekennzeichnet, dass** die Rollenanordnung (5,9,13) höhenverstellbar am Ständer (2) angeordnet ist.

7. Sägeseilführung nach einem der Ansprüche 1 bis 6, **dadurch gekennzeichnet, dass** die Seilführungsrollen (5,9) hohle Schwenkgehäuse (7,11) zur Durchführung des Sägeseils (19) aufweisen.

8. Sägeseilführung nach einem der Ansprüche 1 bis 7, **dadurch gekennzeichnet, dass** die Schwenkgehäuse (7,11) eine Arretierung (18) aufweisen.

## Claims

1. Saw-wire guide having a stand (2) and at least two rotatable wire-guide pulleys (5, 9) mounted thereon in a swivelling manner, **characterized in that** the swivel axes (8, 12) of the wire-guide pulleys (5, 9) are arranged at an angle to one another, and **in that** a deflection means for the saw wire (19) is arranged on the stand (2), in which case the saw wire (19) can be led around the stand (2).

2. Saw-wire guide according to Claim 1, **characterized in that** the swivel axes (8, 12) are arranged in the same plane and at an adjustable angle of preferably 90° to one another.

3. Saw-wire guide according to Claim 1 or 2, **characterized in that** the deflection means is designed as a rotatable deflection pulley (13).

4. Saw-wire guide according to Claim 1, 2 or 3, **characterized in that** the deflection pulley (13) has an elastic wire-guide surface (15), preferably of rubber.

5. Saw-wire guide according to one of Claims 1 to 4, **characterized in that** the wire-guide surface (15) has angular profiling (21).

6. Saw-wire guide according to one of Claims 1 to 5, **characterized in that** the pulley arrangement (5, 9, 13) is arranged on the stand (2) in a vertically adjustable manner.

7. Saw-wire guide according to one of Claims 1 to 6, **characterized in that** the wire-guide pulleys (5, 9) have hollow swivel housings (7, 11) for the saw wire (19) to pass through.

8. Saw-wire guide according to one of Claims 1 to 7, **characterized in that** the swivel housings (7, 11) have a locking means (18).

## Revendications

1. Guide-câble de scie comportant un support (2) et au moins deux rouleaux (5, 9) guide-câble rotatifs montés à pivotement sur ce support, **caractérisé en ce que** les axes (8, 12) de pivotement des rouleaux (5, 9) guide-câble sont disposés en faisant un angle l'un par rapport à l'autre, et **en ce qu'**un renvoi pour le câble (19) de scie est disposé sur le support (2), le câble (19) de scie pouvant être guidé autour du support (2).

2. Guide-câble de scie suivant la revendication 1, **caractérisé en ce que** les axes (8, 12) de pivotement sont disposés dans le même plan et sous un angle réglable, de préférence égal à 90°, l'un par rapport à l'autre.

3. Guide-câble de scie suivant la revendication 1 ou 2, **caractérisé en ce que** le renvoi est réalisé sous forme de rouleau (13) de renvoi rotatif.

4. Guide-câble de scie suivant la revendication 1, 2 ou 3, **caractérisé en ce que** le rouleau (13) de renvoi comporte une surface (15) guide-câble élastique, de préférence en caoutchouc.

5. Guide-câble de scie suivant l'une des revendications 1 à 4, **caractérisé en ce que** la surface (15) guide-câble comporte un profilage (21) oblique.

6. Guide-câble de scie suivant l'une des revendications 1 à 5, **caractérisé en ce que** l'ensemble (5, 9, 13) de rouleaux est disposé réglable en hauteur sur le support (2).

7. Guide-câble de scie suivant l'une des revendications 1 à 6, **caractérisé en ce que** les rouleaux (5, 9) guide-câble comportent des corps (7, 11) pivotants creux pour le passage du câble (19) de scie.

8. Guide-câble de scie suivant l'une des revendications 1 à 7, **caractérisé en ce que** les corps (7, 11) pivotants comportent un moyen (18) de blocage.
